Europäisches Patentamt

European Patent Office

Office européen des brevets

(11) Veröffentlichungsnummer: **0 423 657 A1**

## (12) EUROPÄISCHE PATENTANMELDUNG

(21) Anmeldenummer: 90119644.4

(22) Anmeldetag: 13.10.90

(51) Int. Cl.⁵: **F16B 2/02**, F16B 21/20, F16D 1/08, B23Q 1/28

(30) Priorität: 19.10.89 DE 3934815
14.09.90 DE 4029178

(43) Veröffentlichungstag der Anmeldung:
24.04.91 Patentblatt 91/17

(84) Benannte Vertragsstaaten:
DE ES FR GB IT SE

(71) Anmelder: ALBERT SCHREM
WERKZEUGFABRIK GmbH
Ulmer Strasse 56
W-7928 Giengen 1(DE)

(72) Erfinder: Schrem, Monika
Beim Kreuzstein 1
W-7928 Giengen(DE)

(74) Vertreter: Jackisch, Walter, Dipl.-Ing. et al
Menzelstrasse 40
W-7000 Stuttgart 1(DE)

(54) **Spannvorrichtung in einer Werkzeugmaschine.**

(57) Die Anmeldung betrifft eine Spannvorrichtung zum Festlegen eines Werkstückes (2) an einem Werkstückträger (41) mit einem Spannmittel zum Aufbringen einer zur Werkstückträgerachse (1a) radialen Spannkraft auf eine innere oder äußere Mantelfläche (8, 8a) des Werkstükkes (2). Bekannte Spannmittel sind aufwendig aufgebaut und weisen nur einen geringen Spannbereich auf.

Gemäß der Anmeldung ist vorgesehen, das Spannmittel durch eine sich axial erstreckende, rohrförmige Federanordnung (20) zu bilden, deren eines axiales Ende am Werkstückträger (41) und deren anderes axiales Ende an einer Spannmutter (40) abgestützt ist. Die Spannmutter (40) ist zur Änderung der axialen Länge der Federanordnung (20) verlagerbar, wobei die Federanordnung (20) in Abhängigkeit der Änderung ihrer axialen Länge zur radialen Anlage an einer Mantelfläche (8, 8a) ihren Durchmesser ändert.

Anwendung in Werkzeugmaschinen aller Art.

Fig. 4

## SPANNVORRICHTUNG IN EINER WERKZEUGMASCHINE

Die Erfindung bezieht sich auf eine Spannvorrichtung nach dem Oberbegriff des Anspruches 1.

Spannvorrichtungen dieser Art finden häufig Verwendung im Maschinenbau, insbesondere Werkzeugmaschinenbau. Neben einer ausreichenden Pressung eines Werkstückes gegen einen Werkstückträger ist auch eine sichere Verspannung in orthogonaler Richtung, also quer zur Längsachse des Werkstückträgers wünschenswert. Dies insbesondere dann, wenn das Werkstück mit nur einer Spannvorrichtung befestigt werden soll, was aus Gründen eines raschen und daher zeitsparenden Werkzeugwechsels anzustreben ist. Oft kommt wegen der zu bearbeitenden inneren oder äußeren Werkstückmantelfläche auch keine andere Befestigungsart in Betracht als die mit einer zentralen Spannvorrichtung. Hierzu werden oft hydraulisch aufweitbare Spannmittel eingesetzt, die eine Verspannung in orthogonaler Richtung bewirken, jedoch aufwendig und teuer sowie zeitraubend in der Handhabung sind.

Der Erfindung liegt die Aufgabe zugrunde, eine Spannvorrichtung derart auszubilden, daß bei einfachem Aufbau und problemloser Handhabung eine sichere Verspannung eines Werkstückes oder Werkzeuges in orthogonaler Richtung in einem großen Spannbereich möglich ist.

Diese Aufgabe wird mit den kennzeichnenden Merkmalen des Anspruches 1 gelöst.

Durch das axiale Zusammendrücken der Federanordnung wird bei einfachem Aufbau und leichter Handhabung sowohl eine Selbstzentrierung des Werkstückes bzw. Werkzeuges gegenüber dem Werkstückträger als auch eine sichere radiale Verspannung des Werkstückes bzw. Werkzeuges am Werkstückträger erreicht. Die erfindungsgemäße Spannvorrichtung besteht aus wenigen einfachen und robusten Teilen, so daß sie kostengünstig herstellbar ist und bei hoher Funktionssicherheit eine erhebliche Lebensdauer aufweist.

Vorzugsweise ist die Federanordnung aus zwei Schraubenfedern gebildet, die unterschiedliche Durchmesser aufweisen und koaxial zueinander angeordnet sind. Dabei liegen die Windungen der einen Schraubenfeder zwischen den Windungen der anderen Schraubenfeder, wobei der Querschnittsdurchmesser des Federmaterials der einen Schraubenfeder größer ist als der Abstand zweier benachbarter Windungen (Ganghöhe) der anderen Schraubenfeder. Durch diese Ausgestaltung wird erreicht, daß beim Spannvorgang aufgrund der axialen Längenverkürzung der Federanordnung zumindest die Ganghöhe einer Schraubenfeder reduziert wird und damit die Windungen der anderen Schraubenfeder eine radiale Verlagerung erfahren.

Zur radialen Verspannung kann es ausreichend sein, wenn eine der Schraubenfedern, nämlich die zur Anlage an die Mantelfläche vorgesehene, sich lediglich über einen Teilabschnitt der Gesamtlänge der Federmittel erstreckt; vorzugsweise sollte sie sich zumindest über die axiale Länge der Mantelfläche erstrecken, an der sie sich radial anlegen soll.

Der Querschnitt des Federmaterials, aus dem die Schraubenfedern gebildet sind, kann für beide Federn gleich sein. Vorzugsweise ist jedoch vorgesehen, die Schraubenfedern aus einem Federmaterial mit unterschiedlichem Querschnittsdurchmesser auszubilden. Als besonders geeignete Ausführung wird angesehen, daß eine Schraubenfeder aus einem Federmaterial mit 4,5 mm Querschnittsdurchmesser und die andere Schraubenfeder aus einem Federmaterial mit 4 mm Querschnittsdurchmesser gebildet ist. Dabei ist die aus dem dickeren Federmaterial gebildete Schraubenfeder von der Mantelfläche abgewandt liegend angeordnet, auf die die radiale Spannkraft aufzubringen ist. Die Schraubenfeder mit dem dickeren Federmaterial dient bei axialer Verspannung zum radialen Aufweiten der anderen Schraubenfeder, wobei die andere Schraubenfeder einen Außendurchmesser aufweist, der im ungespannten Zustand maximal um den Querschnittsdurchmesser der Windungen der anderen Schraubenfeder größer ist als der Außendurchmesser der inneren Schraubenfeder.

Als Federmittel sind auch lose aufeinander liegende Ringe geeignet, die bei axialer Kraftbeaufschlagung ihren Durchmesser verändern, wie dies beispielsweise bei Tellerfedern der Fall ist. Alternativ zu einer mechanischen Spannmutter kann auch außerhalb des Werkstückträgers liegend ein Arbeitszylinder vorgesehen sein, der hydraulisch oder pneumatisch zu betätigen ist und auf die Federanordnung wirkt. Auch Kombinationen mechanisch und/oder fluidisch betätigbarer Spannmittel sind zweckmäßig.

In der Federanordnung können nicht nur Metalle wie Stahldraht oder dgl. zur Anwendung gelangen, sondern es sind zweckmäßig auch Kunststoffe oder ähnliche Materialien mit entsprechender Federeigenschaft verwendbar bzw. Materialkombinationen einsetzbar, wie beispielsweise Metall/Kunststoff.

Eine besonders kostengünstig herzustellende und leicht zu handhabende Anordnung der Spannvorrichtung besteht darin, daß die Spannmutter eine im wesentlichen becherförmige Gestalt aufweist, die mit ihrem offenen Ende dem Werkstück zugewandt ist, wobei der Rand der Becherform als Spannfläche ausgebildet ist. Um zu erreichen, daß auf jeden Fall die Federanordnung in radialer Richtung das Werkstück spannt, bevor die Spannfläche der Spannmutter an dem Werkstück zur Anlage kommt, ist in der Spannmutter eine begrenzte verschiebbare Hülse angeordnet, die ein herausragendes Ende besitzt, welches mit dem Ende der Federanordnung in Wechselwirkung steht. Diese Hülse ist andererseits über eine Schraubenfeder an der Spannmutter abgestützt.

Eine weitere Vereinfachung der Spannvorrichtung kann dadurch erreicht werden, daß ein Tisch in der Werkzeugmaschine als Werkzeugträger ausgebildet ist. Ein Spanndorn oder ein T-Stein kann dann direkt in dem Tisch verankert werden.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:

Fig. 1 einen Längsschnitt durch eine Spannvorrichtung mit einem Spanndorn zur Halterung eines Werkstückes mit zentraler Bohrung,

Fig. 2a bis Fig. 2c Prinzipdarstellungen der Wirkungsweise der Radialverspannung mit der erfindungsgemäßen Spannvorrichtung gemäß Fig. 1,

Fig. 3 einen Längsschnitt durch eine Spannvorrichtung in einer anderen Ausführungsform,

Fig. 4 eine Ausführungsvariante zu Fig. 1 mit verkürzter Federanordnung.

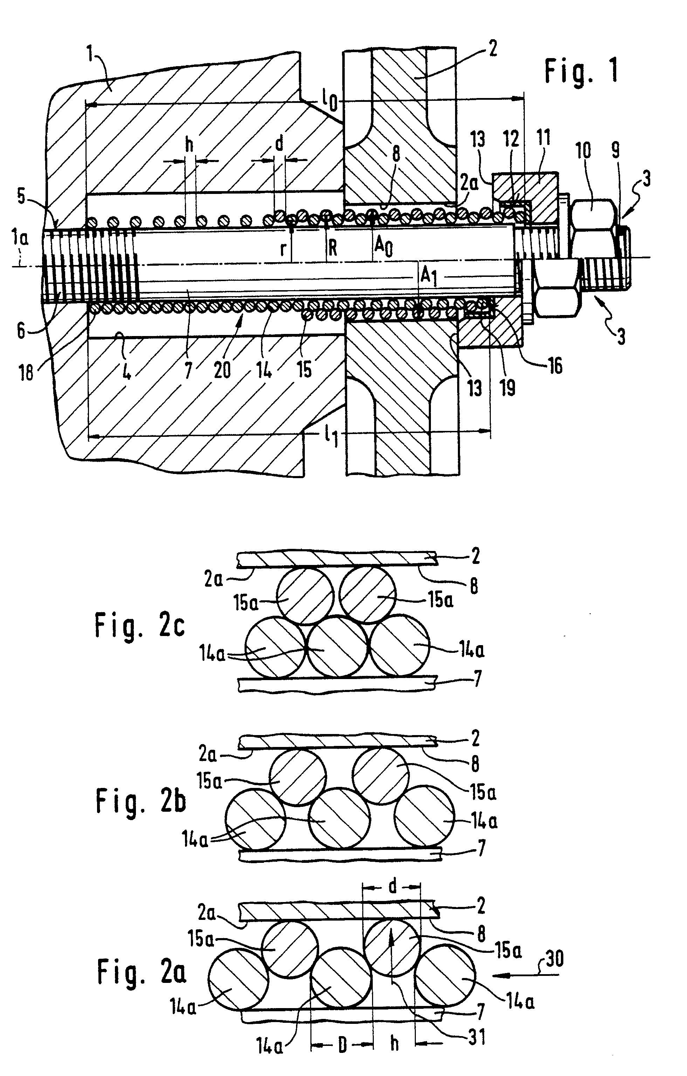

In Fig. 1 ist die erfindungsgemäße Spannvorrichtung in der oberen Bildhälfte in der entspannten Stellung und in der unteren Bildhälfte in der Spannstellung gezeigt. Die Spannvorrichtung besteht aus einem Werkstückträger 1 und einem Spanndorn 3, der in den Boden einer im Durchmesser größer als der Spanndorn 3 ausgebildeten zylindrischen Ausnehmung 4 des Werkstückträgers 1 eingeschraubt ist. Hierzu ist im Boden eine achsgleich zur Achse 1a des Werkstückträgers 1 angeordnete Gewindebohrung 5 vorgesehen, in die das eine Ende des Spanndorns 3 mit einem Gewindeabschnitt 6 eingeschraubt ist. Der Schaft 7 des Spanndorns 3 ragt aus der Ausnehmung 4 des Werkstückträgers 1 heraus und weist an seinem freien Ende einen weiteren Gewindeabschnitt 9 auf.

Auf den Spanndorn 3 ist eine Federanordnung 20 aufgeschoben, deren eines Ende 18 sich am Boden der Ausnehmung 4 abstützt und deren anderes Ende 19 sich an einer auf dem Gewindeabschnitt 9 aufgeschraubten Spannmutter 10 abstützt. Die Federanordnung ist im gezeigten Ausführungsbeispiel aus zwei koaxial zueinander angeordneten Schraubenfedern 14 und 15 gebildet, die den Schaft 7 des Spanndorns 3 umgeben. Die erste Schraubenfeder 14 liegt mit geringem radialen Spiel auf dem Schaft 7 und besteht vorzugsweise aus einem Federdraht. Zwei einander benachbarte Windungen der Schraubenfeder 14 weisen einen Abstand h voneinander auf, der auch als Ganghöhe der Schraubenfeder bezeichnet werden kann. Der mittlere Radius der Schraubenfeder 14 ist mit r bezeichnet.

Koaxial zur inneren Schraubenfeder 14 ist die zweite Schraubenfeder 15 angeordnet, deren mittlerer Radius R etwas größer als der Radius r der ersten Schraubenfeder 14 ist. Dabei ist der Innendurchmesser der Schraubenfeder 15 geringfügig kleiner als der Außendurchmesser der inneren Schraubenfeder 14, so daß die Windungen der Schraubenfeder 15 in den Abständen h zwischen den Windungen der ersten Schraubenfeder 14 liegen. Der Querschnittsdurchmesser d der Windungen der zweiten Schraubenfeder 15 ist dabei so bemessen, daß er größer als der Abstand h zwischen zwei benachbarten Windungen der ersten Schraubenfeder 14 ist, wodurch sichergestellt ist, daß auch in entspanntem Zustand der Schraubenfedern 14 und 15 die jeweiligen Windungen der beiden Schraubenfedern aneinander liegen. Durch diese Bemessung wird auch erreicht, daß die Windungen der äußeren Schraubenfeder nicht vollständig zwischen die Windungen der inneren Schraubenfeder eintauchen können, was dazu führen würde, daß bei axialer Druckbeaufschlagung der Federanordnung 20 keine zum Einspannen des Werkstückes 2 notwendige radiale Kraftkomponente entstehen würde. Die vorstehend genannte Bemessung stellt somit die Erzeugung einer radialen Spannkraft sicher.

Wie aus Fig. 1 ersichtlich, erstreckt sich die Schraubenfeder 14 axial im wesentlichen über die ganze Länge des Schaftes, während sich die Schraubenfeder 15 im wesentlichen nur über die aus der Ausnehmung 4 herausragende Schaftlänge erstreckt.

Das der Spannmutter 10 zugewandte Ende 19 der Federanordnung 20 liegt in einer Hülse 11, die auf den Spanndorn 3 aufgeschoben ist. Dabei liegt das Federende am Boden 16 der Hülse 11 an, so daß deren Ausnehmung 12 das Ende 19 der Federanordnung 20 übergreift.

Das zum Festspannen am Werkstückträger 1 vorgesehene Werkstück 2 (bzw. Werkzeug) weist eine zentrale Bohrung 2a auf, die vom Spanndorn 3 und der Federanordnung 20 durchragt ist. Im ungespannten Zustand der Spannvorrichtung (obere Bildhälfte) weist die Federanordnung 20 eine Länge $l_0$ auf, bei der der Außendurchmesser $A_0$ der äußeren Schraubenfeder 15 zur inneren Mantelfläche 8 der Zentralbohrung 2a einen Abstand aufweist. Aufgrund dieses Abstandes zwischen der Mantelfläche 8 und der äußeren Hüllkurve der Federanordnung 20 bzw. der Schraubenfeder 15 kann das Werkstück 2 bis zur Anlage am Werkstückträger 1 auf den Spanndorn 3 aufgeschoben werden.

Nunmehr wird entweder durch Einschrauben des Spanndorns 3 in die Gewindebohrung 5 oder durch Aufschrauben der Spannmutter 10 auf den Gewindeabschnitt 9 die axiale Länge $l_0$ der Federanordnung 20 bis auf $l_1$ verkürzt, wobei sich der Durchmesser $A_0$ der äußeren Hüllkurve der Federanordnung 20 bzw. der Schraubenfeder 15 auf den Durchmesser $A_1$ vergrößert, bei dem die Windungen der äußeren Schraubenfeder 15 an der inneren Mantelfläche 8 des Werkstückes 2 anliegen und eine radiale Kraft auf diese Mantelfläche ausüben. Im Ausführungsbeispiel ist vorgesehen, daß in dieser Stellung die Stirnfläche 13 der Hülse 11 am Werkstück 2 anliegt und dieses axial gegen den Werkstückträger andrückt, so daß das Werkstück auch axial verspannt ist.

Durch das axiale Zusammendrücken der Federanordnung 20 hat sich deren Außendurchmesser $A_0$ bei entspanntem Zustand auf den größeren Außendurchmesser $A_1$ bei gespanntem Zustand verändert, wobei das Werkstück 2 sowohl zur Werkstückträgerachse 1a ausgerichtet wurde als auch durch Aufbringung der Radialkräfte auf die innere Mantelfläche 8 radial sicher gehalten wird. Diese radiale Halterung kann auch eine ausreichende axiale Halterung auf dem Spanndorn gewährleisten, so daß ein zusätzliches axiales Verspannen entfallen könnte.

In den Fig. 2a bis 2c ist das Prinzip der Radialverspannung mittels der Federanordnung 20 verdeutlichend dargestellt. Hervorzuheben ist, daß auch bei sehr großen Durchmesserunterschieden der Zentralbohrung 2a bei verschiedenen Werkstücken 2 eine gute Halterung des Werkstückes mit der erfindungsgemäßen Spannvorrichtung erzielbar ist, da die Federanordnung 20 einen großen Spannbereich abdeckt.

Aufgrund des Einschraubens des Spanndorns bzw. Zuschraubens der Spannmutter 10 wird die innere Schraubenfeder 14 bzw. deren Einzelwindungen 14a in Pfeilrichtung 30 kraftbeaufschlagt, wodurch sie axial aufeinander zu bewegt werden. Der Abstand h benachbarter Windungen verkleinert sich, wodurch die Windungen 15a der äußeren Schraubenfeder radial nach außen gedrückt werden (Pfeil 31), bis sie an der inneren Mantelfläche 8 der Zentralbohrung 2a anliegen. Da die Windungen 14a der inneren Schraubenfeder 14 am Schaft 7 anliegen und die Windungen 15a der äußeren Schraubenfeder 15 an der inneren Mantelfläche 8 des Werkstückes 2, wird die Axialkraft in eine radiale Spannkraft zum Zentrieren und radialen Verspannen des Werkstückes 2 umgesetzt.

Ist der Abstand der Windungen 14a der inneren Schraubenfeder 14 in der Spannstellung gemäß Fig. 2a noch relativ groß, so wird er bei größerem Innendurchmesser der Zentralbohrung 2a in einer Spannstellung gemäß Fig. 2b kleiner, bis er bei einem maximal zulässigen Innendurchmesser der Zentralbohrung 2a zu Null wird. Je nach Wahl der Durchmesserquerschnitte der Schraubenfedern lassen sich unterschiedliche, sehr große Spannbereiche abdecken, so daß die erfindungsgemäße Spannvorrichtung problemlos auch in Bohrungen mit großen Toleranzabweichungen einsetzbar ist.

In den Prinzipdarstellungen der Fig. 2a bis 2c ist der Querschnitt des Federmaterials der ersten Schraubenfeder 14 mit einem etwas größeren Durchmesser D vorgesehen als der Querschnittsdurchmesser d des Federmaterials der zweiten Schraubenfeder 15. So ist vorzugsweise der Durchmesser D zu 4,5 mm und der Durchmesser d zu 4 mm gewählt. Die erfindungsgemäße Wirkung ist jedoch auch zu erzielen, wenn die Durchmesser sowohl vom absoluten Betrag her als auch vom Differenzbetrag her anders vorgesehen sind. Wesentlich ist nur, daß der Außendurchmesser $A_0$ der äußeren Schraubenfeder 15 nicht größer bzw. kleiner ist als die Summe des Querschnittsdurchmessers d der Windung der Schraubenfeder 15 plus dem Außendurchmesser der inneren Schraubenfeder 14.

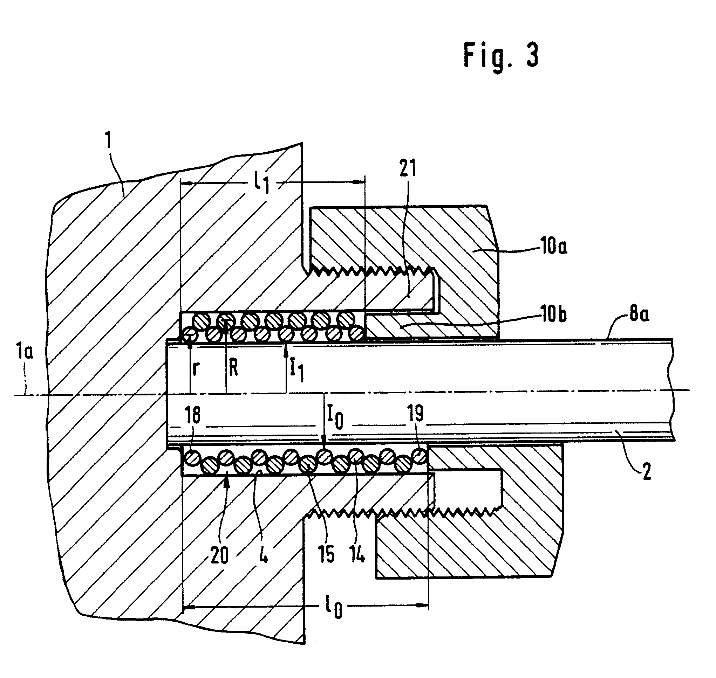

Im Ausführungsbeispiel einer erfindungsgemäßen Spannvorrichtung nach Fig. 3 weist der Werkstückträger 1 wiederum eine Ausnehmung 4 aus, in der eine Federanordnung 20 angeordnet ist. Die Federanordnung 20 liegt an der inneren Mantelfläche der zylindrischen Ausnehmung 4 an und stützt sich mit einem Ende 18 am Boden der Ausnehmung 4 und mit dem anderen Ende 19 an einer Spannmutter 10a ab. Die Spannmutter 10a ist auf einem Schraubansatz 21 des Werkstückträgers 1 aufgeschraubt und greift mit einem Ringansatz 10b in die Ausnehmung 4 ein. An der Stirnseite des Ringansatzes 10b liegt das Ende 19 der Federanordnung 20 an.

Auch im Ausführungsbeispiel nach Fig. 3 ist die Federanordnung 20 aus zwei Schraubenfedern 14 und 15 gebildet, die entsprechend ausgebildet sind. Es wurden daher gleiche Bezugszeichen verwendet.

Das Werkstück 2 durchragt zentral die Spannmutter 10a und liegt in der Federanordnung 20; vorzugsweise stützt sich das Werkstück 2 mit dem in der Ausnehmung 4 liegenden Ende am Boden der Ausnehmung ab.

In der entspannten Stellung der Federanordnung 20 weist diese eine Länge $l_0$ sowie eine innere Hüllkurve bzw. einen Innendurchmesser $l_0$ auf. Der Innendurchmesser $l_0$ ist größer als der Außendurchmesser der äußeren Mantelfläche 8a des Werkstückes 2, so daß im entspannten Zustand der Federanordnung 20 das Werkstück 2 axial aus der Spannvorrichtung herausgezogen bzw. in diese eingeschoben werden kann.

Wird nun die Spannmutter 10a auf den Schraubansatz 21 aufgeschraubt, so taucht der innere Ringansatz 10b in die Ausnehmung ein und drückt die Federanordnung 20 bis auf eine Länge $l_1$ zusammen. Entsprechend den Darstellungen in den Fig. 2a bis 2c werden durch das axiale Zusammenpressen der Federanordnung 20 die Windungen der inneren Schraubenfeder 14 radial nach innen auf die äußere Mantelfläche 8a des Werkstückes 2 zugestellt, bis die innere Schraubenfeder auf den Innendurchmesser $l_1$ zugestellt ist und eine radiale Spannkraft auf die äußere Mantelfläche 8a des Werkstücks 2 aufbringt. Durch die erfindungsgemäße Federanordnung 20 wird dabei das Werkstück 2 zur Achse 1a des Werkstückträgers 1 ausgerichtet und radial derart verspannt, daß ein axiales Herausziehen des Werkstücks 2 aus der Spannvorrichtung nicht mehr möglich ist. Das Werkstück 2 ist im Werkstückträger 1 festgelegt.

Auch im Ausführungsbeispiel nach Fig. 3 werden die Querschnittsdurchmesser und Außen- bzw. Innendurchmesser der Schraubenfedern 14, 15 so aufeinander abgestimmt, daß sich im ungespannten Zustand die Windungen in Axialrichtung der Federanordnung nur zum Teil überdecken, so daß bei einem axialen Zusammendrücken der Schraubenfeder 15 die Windungen der Schraubenfeder 14 eine radiale Kraftkomponente erfahren. Dabei ist vorteilhaft der Querschnittsdurchmesser des Federmaterials der äußeren Schraubenfeder 15 dicker als der der inneren Schraubenfeder 14.

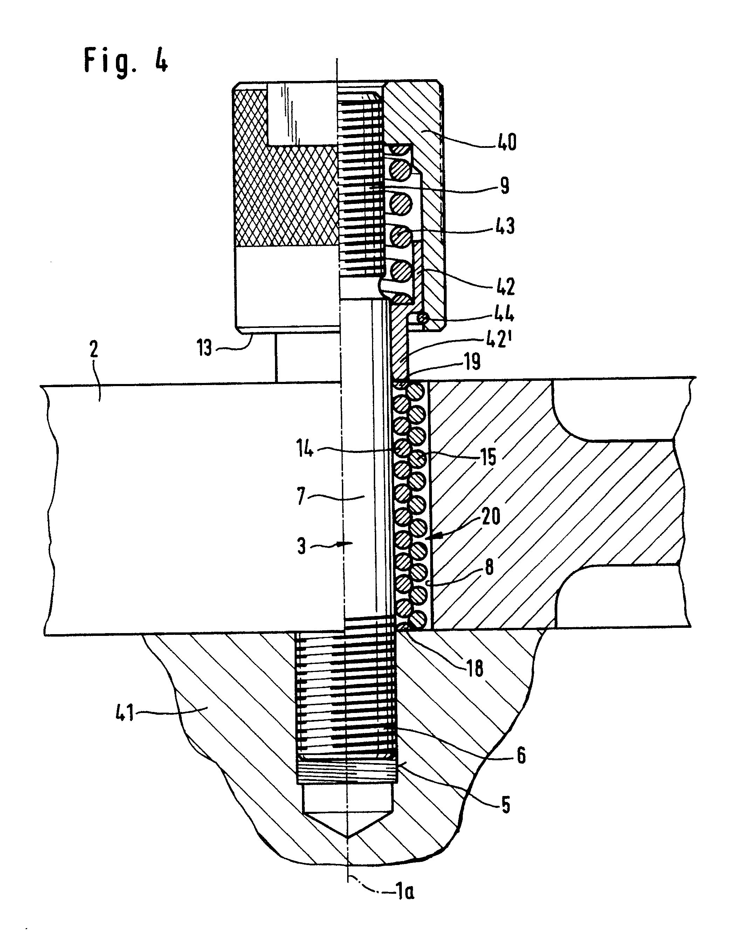

In Fig. 4 ist eine Spannvorrichtung gezeigt, bei der der Tisch 41 der Werkzeugmaschine als Werkzeugträger dient. In diesem Tisch 41 ist eine Gewindebohrung 5 angeordnet, in die der Spanndorn 3 mit seinem Gewindeabschnitt 6 eingeschraubt ist. Der Spanndorn 3 besitzt an seinem anderen Ende einen weiteren Gewindeabschnitt 9, auf den eine im wesentlichen becherförmige Spannmutter 40 geschraubt ist. Dabei ist das offene Ende der Becherform auf das Werkstück 2 gerichtet und dessen Rand bildet die Spannfläche 13, die zur Anlage am Werkstück 2 vorgesehen ist. Zwischen dem Schaft 7 des Spanndorns 3 und dem Werkstück 2 ist ein Ringraum gebildet, in dem die Federanordnung 20 mit den axialen Enden 18 und 19 eingesetzt ist.

Innerhalb der Spannmutter 40 ist eine den Schaft 7 des Spanndorns 3 umgebende Hülse 42 begrenzt verschiebbar geführt, die mit ihrem aus der Spannmutter 40 herausragenden Ende 42' mit der ersten Schraubenfeder 14 in Wechselwirkung steht. Andererseits wird die Hülse 42 von einer innerhalb der Spannmutter 40 angeordneten Schraubenfeder 43 beaufschlagt, deren Steifigkeit größer ist als die der Feder anordnung 20. Dadurch werden beim Spannen der Vorrichtung zunächst die erste und die zweite Schraubenfeder 14 und 15 gespannt, wodurch sich die axiale Länge der Federanordnung 20 verringert bei gleichzeitiger Vergrößerung des Durchmessers. Liegt die zweite Schraubenfeder 15 kraftschlüssig an der inneren Mantelfläche 8 des Werkstückes 2 an, so wird ein noch vorhandener Spalt zwischen Spannfläche 13 und Werkstück 2 dadurch eliminiert, daß die Feder 43 durch weiteres Drehen der Spannmutter 40 zusammengedrückt wird. Damit die Hülse 42 nicht aus der Spannmutter 40 herausrutschen kann, ist zur Sicherung ein Sprengring 44 eingesetzt.

Anstelle des eingeschraubten Spanndorns 3 kann selbstverständlich auch ein allgemein bekannter T-Stein verwendet werden, der in eine T-Nut des Werkzeugtisches eingesetzt wird.

In den gezeigten Ausführungsbeispielen ist das Spannen der Federanordnung 20 durch Zuschrauben einer Spannmutter 10 bzw. 10a oder 40 oder aber auch durch Zuschrauben des Spanndorns 3 vorgesehen. Es kann vorteilhaft sein, das Spannen der Federanordnung 20 durch andere mechanische Elemente, durch einen hydraulisch oder pneumatisch betätigten Zylinder oder durch eine Kombination mechanischer Elemente mit hydraulischen oder pneumatischen Zylindern vorzunehmen. Dabei kann ein axiales Zusammendrücken der Federanordnung 20 zur Zentrierung und radialen Verspannung des Werkstücks getrennt von einer axialen Verspannung des Werkstücks am Werkstückträger vorgesehen sein.

Es kann vorteilhaft sein, mindestens eine der Federn 14 bzw. 15 aus Kunststoff vorzusehen, vorzugsweise die Feder, die an der Mantelfläche 8, 8a des Werkstücks 2 anliegt. Aufgrund der höheren Reibbeiwerte des Kunststoffmaterials kann so ein äußerst sicheres Einspannen des Werkstückes erreicht werden. Auch kann die Ausbildung der Federn aus unterschiedlichen Materialien vorteilhaft sein. So kann die eine Schraubenfeder aus Federdraht, vorzugsweise Stahldraht und die andere Schraubenfeder aus Kunststoff bestehen. Neben der Bildung der Federanordnung durch Schraubenfedern ist auch die Verwendung von in einer axialen Reihe nebeneinander liegenden Ringen, vorzugsweise Tellerfedern, zur Bildung der Federanordnung zweckmäßig.

In den gezeigten Ausführungsbeispielen haben die Windungen oder Ringe kreisförmigen Querschnitt. Im Rahmen der Erfindung können auch andere Querschnittsformen wie z.B. dreieckiger Querschnitt, mehreckiger Querschnitt, ellipsenförmige Querschnitt vorteilhaft sein, wenn die gewählte Querschnittsform das Entstehen einer etwa radial gerichteten Kraftkomponente bei axialer Krafteinleitung gewährleistet.

**Ansprüche**

1. Spannvorrichtung zum Festlegen eines Werkstückes (2) an einem Werkstückträger (1, 41), vorzugsweise zur Halterung von Werkstücken an einer Werkzeugmaschine, mit einem Spannmittel zum Aufbringen einer zur Werkstückträgerachse (1a) radialen Spannkraft auf eine innere oder äußere Mantelfläche (8, 8a) des Werkstückes (2),
dadurch gekennzeichnet, daß das Spannmittel eine sich axial erstreckende, rohrförmige Federanordnung (20) ist, deren eines axiales Ende (18) am Werkstückträger (1, 41) und deren anderes axiales Ende (19) an einer Spannmutter (10, 10a, 40) abgestützt ist und die Spannmutter (10, 10a, 40) zur Änderung der axialen Länge ($l_0$) der Federanordnung (20) verlagerbar ist, wobei die Federanordnung (20) in Abhängigkeit der Änderung ihrer axialen Länge ($l_0$) zur radialen Anlage an einer Mantelfläche (8, 8a) ihren Durchmesser (A, I) ändert.

2. Spannvorrichtung nach Anspruch 1,
dadurch gekennzeichnet, daß die Federanordnung (20) aus zwei Schraubenfedern (14, 15) besteht, die unterschiedliche mittlere Durchmesser (2r, 2R) aufweisen und zueinander koaxial angeordnet sind.

3. Spannvorrichtung nach Anspruch 2,
dadurch gekennzeichnet, daß die eine Schraubenfeder (14, 15) mit ihren Windungen jeweils zwischen den Windungen der anderen Schraubenfeder (15, 14) liegt und zumindest der Querschnittsdurchmesser (d, D) der Windung einer Schraubenfeder (14, 15) größer ist als der Abstand (h) zwischen zwei benachbarten Windungen der anderen Schraubenfeder (15, 14).

4. Spannvorrichtung nach Anspruch 2 oder 3,
dadurch gekennzeichnet, daß sich die Schraubenfedern (14, 15) über die ganze axiale Länge der Federanordnung (20) erstrecken (Fig. 3 und 4).

5. Spannvorrichtung nach Anspruch 2 oder 3,
dadurch gekennzeichnet, daß sich eine der Schraubenfedern (15), vorzugsweise die der Mantelfläche (8, 8a) benachbarte Schraubenfeder, im wesentlichen nur über die axiale Länge der Werkstückmantelfläche (8, 8a) erstreckt (Fig. 1).

6. Spannvorrichtung nach einem der Ansprüche 2 bis 5,
dadurch gekennzeichnet, daß die Windungsquerschnitte der Schraubenfedern (14, 15) gleichen Durchmesser haben.

7. Spannvorrichtung nach einem der Ansprüche 2 bis 5,
dadurch gekennzeichnet, daß die Windungsquerschnitte der Schraubenfedern (14, 15) unterschiedliche Durchmesser (d, D) aufweisen (Fig. 2a), wobei vorzugsweise der eine Durchmesser (D) 4,5 mm und der andere Durchmesser (d) 4 mm beträgt.

8. Spannvorrichtung nach einem der Ansprüche 2 bis 7,
dadurch gekennzeichnet, daß die Schraubenfedern (14, 15) aus Federdraht, vorzugsweise aus Stahldraht bestehen.

9. Spannvorrichtung nach Anspruch 1,
dadurch gekennzeichnet, daß die Federanordnung (20) aus mehreren, lose aufeinander liegenden Ringen oder Tellerfedern besteht.

10. Spannvorrichtung nach einem der Ansprüche 2 bis 9,
dadurch gekennzeichnet, daß mindestens eine der Federn, vorzugsweise die an der Mantelfläche (8, 8a) anliegende Feder, aus Kunststoff besteht.

11. Spannvorrichtung nach einem der Ansprüche 1 bis 10,
dadurch gekennzeichnet, daß das dem Werkstückträger (2) zugewandte Ende (18) der Federanordnung (20) in einer vorzugsweise zylindrischen Aufnahme (4) des Werkstückträgers (1) aufgenommen ist.

12. Spannvorrichtung nach einem der Ansprüche 1 bis 11,
dadurch gekennzeichnet, daß die Spannmutter (10a) in die Aufnahme (4) ragend am Werkstückträger (1) festgeschraubt ist und das Werkstück (2) die Spannmutter (10a) durchragt und in der Federanordnung (20) liegt.

13. Spannvorrichtung nach Anspruch 12,
dadurch gekennzeichnet, daß die Spannmutter (10a) auf einem Schraubansatz (21) des Werkstückträgers (1) aufgeschraubt ist.

14. Spannvorrichtung nach einem der Ansprüche 1 bis 11,
dadurch gekennzeichnet, daß die Federanordnung (20) von einem Spanndorn (3) durchragt ist, der an einem Ende achsgleich im Werkstückträger (1) festliegt und auf dessen freiem Ende (9) die Spannmutter (10) aufgeschraubt ist.

15. Spannvorrichtung nach Anspruch 14,
dadurch gekennzeichnet, daß das der Spannmutter (10) zugewandte Ende (19) der Federanordnung (20) in einer auf dem Spanndorn (3) aufgeschobenen Hülse (11) liegt, welche sich an der Spannmutter (10) abstützt.

16. Spannvorrichtung nach Anspruch 7 und 14 oder 15,
dadurch gekennzeichnet, daß die Schraubenfeder (14) mit dem größeren Querschnittsdurchmesser einer Windung den Schaft (7) des Spanndorns (3) mit geringem radialen Spiel umgibt und die andere Schraubenfeder (15) einen Außendurchmesser (A) aufweist, der im ungespannten Zustand ($A_0$) maximal um den Querschnittsdurchmesser (d) der Windung der anderen Schraubenfeder (15) größer ist als der Außendurchmesser der inneren Schraubenfeder (14).

17. Spannvorrichtung nach einem der Ansprüche 1 bis 10,
dadurch gekennzeichnet, daß die Spannmutter (40) eine im wesentlichen becherförmige Gestalt aufweist, die mit ihrem offenen Ende dem Werkstück (2) zugewandt ist, wobei der Rand der Becherform als Spannfläche (13) ausgebildet ist.

18. Spannvorrichtung nach Anspruch 17, dadurch gekennzeichnet, daß in der Spannmutter (40) eine Hülse (42) begrenzt verschiebbar angeordnet ist, die ein herausragendes Ende (42') besitzt, welches mit dem Ende (19) der Federanordnung (20) in Wechselwirkung steht und wobei die Hülse (42) andererseits über eine Schraubenfeder (43) an der Spannmutter abgestützt ist.

19. Spannvorrichtung nach einem der vorhergehenden Ansprüche, dadurch gekennzeichnet, daß ein Tisch (41) der Werkzeugmaschine den Werkzeugträger bildet.

Fig. 1

Fig. 2c

Fig. 2b

Fig. 2a

# Fig. 3

# Fig. 4

## EUROPÄISCHER RECHERCHENBERICHT

Nummer der Anmeldung

**EP 90 11 9644**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | FR-A-1 097 196  (WIKANDER)<br>* Seite 1, linke Spalte, Zeilen 1 - 6 * * Seite 2, linke Spalte, Zeile 40 - rechte Spalte, Zeile 14; Figuren 1-8 *<br>— — — | 1-4,6,8, 14-16,10 | F 16 B 2/02<br>F 16 B 21/20<br>F 16 D 1/08<br>B 23 Q 1/28 |
| Y,A | US-A-4 514 109  (MCKENNA)<br>* Spalte 7, Zeilen 26 - 39; Figuren 1-9 *<br>— — — | 10,1-4,8, 14-16 | |
| X | DE-C-8 868 30  (KÖFER)<br>* das ganze Dokument *<br>— — — | 1,9,14,15 | |
| A | US-A-3 176 590  (UHTENWOLDT ET AL.)<br>* Spalte 2, Zeilen 36 - 62; Figur 1 *<br>— — — — — | 1,9 | |

| | | RECHERCHIERTE SACHGEBIETE (Int. Cl.5) |
|---|---|---|
| | | B 25 B<br>B 23 Q<br>F 16 B<br>F 16 D |

Der vorliegende Recherchenbericht wurde für alle Patentansprüche erstellt

| Recherchenort | Abschlußdatum der Recherche | Prüfer |
|---|---|---|
| Den Haag | 24 Januar 91 | CALAMIDA G. |